# EUROPEAN PATENT APPLICATION

(11) **EP 4 717 494 A1**
(43) Date of publication of application: **01.04.2026**
(21) Application number: 25202981.4
(22) Date of filing: 18.09.2025
(51) Int. Cl.: B60K 35/10, A01B 69/04, B60K 35/22

(54) **WORK VEHICLE CONTROL METHOD, WORK VEHICLE CONTROL PROGRAM, WORK VEHICLE CONTROL SYSTEM, AND WORK SYSTEM**

(30) Priority: 30.09.2024 JP 2024170301
(71) Applicant: Yanmar Holdings Co., Ltd., Osaka-shi, Osaka (JP)
(72) Inventor: SAITO, Masafumi, Osaka-shi (JP); IWAMURA, Keisuke, Osaka-shi (JP)
(74) Representative: Sekiguchi, Kazuya

(57) **Abstract**

[Problem] To provide a work vehicle control method, a work vehicle control program, a work vehicle control system, and a work system, capable of improving a degree of freedom of a timing at which a work vehicle is caused to start a specific action.

[Solution] A work vehicle control method includes causing the work vehicle to perform a specific action and causing a display portion to display a display screen. A start condition for starting the specific action includes a display condition related to the display of the display portion, and it is determined that the display condition is satisfied when either a first screen (guidance screen Dp1) is being displayed as the display screen or a second screen (interruption screen Dp2) different from the first screen (guidance screen Dp1) is being displayed as the display screen and a mode of screen transition satisfies a specific condition.

## Description

### TECHNICAL FIELD

The present invention relates to a work vehicle control method that causes the work vehicle to perform a specific action, a work vehicle control program, a work vehicle control system, and a work system.

### BACKGROUND ART

As a related art, a work vehicle control system (autonomous traveling system) that causes a work vehicle such as a tractor to automatically travel (autonomously travel) along a predetermined travel route is known (see, for example, Patent Document 1). In the work vehicle control system according to the related art, a travel route for automatic travel is generated by a wireless communication terminal, and the work vehicle acquires information such as the travel route from the wireless communication terminal and automatically travels in a field along the travel route.

In the work vehicle control system, when various conditions for starting the automatic travel of the work vehicle are satisfied, the user operates the wireless communication terminal to instruct the work vehicle to start the automatic travel, and thereby, the automatic travel of the work vehicle is started. Specifically, when various conditions for starting the automatic travel are satisfied, the display control portion activates a start operation portion on a work screen displayed on the wireless communication terminal so that the start operation portion can be selected and operated. When the start operation portion on the work screen is operated on the wireless communication terminal in this state, the automatic travel of the work vehicle is started.

### PRIOR ART DOCUMENT

### PATENT DOCUMENT

Patent Document 1: Japanese Unexamined Patent Application Publication No. 2024-23603

### SUMMARY OF INVENTION

### TECHNICAL PROBLEM

In the related art, since the work vehicle can start the specific action (automatic travel) only when a specific display screen (work screen) is displayed on the wireless communication terminal, the specific action cannot be started at a timing desired by the user in some cases.

An object of the present invention is to provide a work vehicle control method, a work vehicle control program, a work vehicle control system, and a work system, capable of improving a degree of freedom of a timing at which a work vehicle is caused to start a specific action.

### SOLUTION TO PROBLEM

A work vehicle control method according to one aspect of the present invention includes causing the work vehicle to perform a specific action and causing a display portion to display a display screen. A start condition for starting the specific action includes a display condition related to display of the display portion, and it is determined that the display condition is satisfied when either a first screen is being displayed as the display screen, or a second screen different from the first screen is being displayed as the display screen and a mode of screen transition satisfies a specific condition.

A work vehicle control program according to one aspect of the present invention is a program for causing one or more processors to execute the work vehicle control method.

A work vehicle control system according to one aspect of the present invention includes an execution processing portion and a display processing portion. The execution processing portion causes the work vehicle to execute a specific action. The display processing portion displays a display screen on a display portion. A start condition for the execution processing portion to start the specific action includes a display condition related to display of the display portion. The execution processing portion determines that the display condition is satisfied when either a first screen is being displayed as the display screen, or a second screen different from the first screen is being displayed as the display screen and a mode of screen transition satisfies a specific condition.

A work system according to one aspect of the present invention includes the work vehicle control system and a machine body of the work vehicle.

### ADVANTAGEOUS EFFECTS OF INVENTION

According to the present invention, it is possible to provide a work vehicle control method, a work vehicle control program, a work vehicle control system, and a work system, capable of improving a degree of freedom of a timing at which a work vehicle is caused to start a specific action.

### BRIEF DESCRIPTION OF DRAWINGS

FIG. 1 is a schematic side view illustrating external appearance of a work vehicle according to a first embodiment.
FIG. 2 is a schematic block diagram of a work system according to the first embodiment.
FIG. 3 is a schematic configuration diagram of the work system according to the first embodiment.
FIG. 4 is a schematic plan view illustrating an example of a target route of the work vehicle according to the first embodiment.
FIG. 5 is a schematic diagram illustrating an example of a display screen in the work system according to the first embodiment.
FIG. 6 is a schematic diagram illustrating an example of screen transition of the display screen in the work system according to the first embodiment.
FIG. 7 is a schematic diagram illustrating an example of screen transition of the display screen in the work system according to the first embodiment.
FIG. 8 is a schematic diagram illustrating an example of screen transition of the display screen in the work system according to the first embodiment.
FIG. 9 is a schematic diagram illustrating an example of screen transition of the display screen in the work system according to the first embodiment.

### DESCRIPTION OF EMBODIMENTS

Hereinafter, an embodiment of the present invention will be described with reference to the accompanying drawings. The following embodiment is an example that embodies the present invention and is not intended to limit the technical scope of the present invention.

### (First Embodiment)

### [1] Overall Configuration

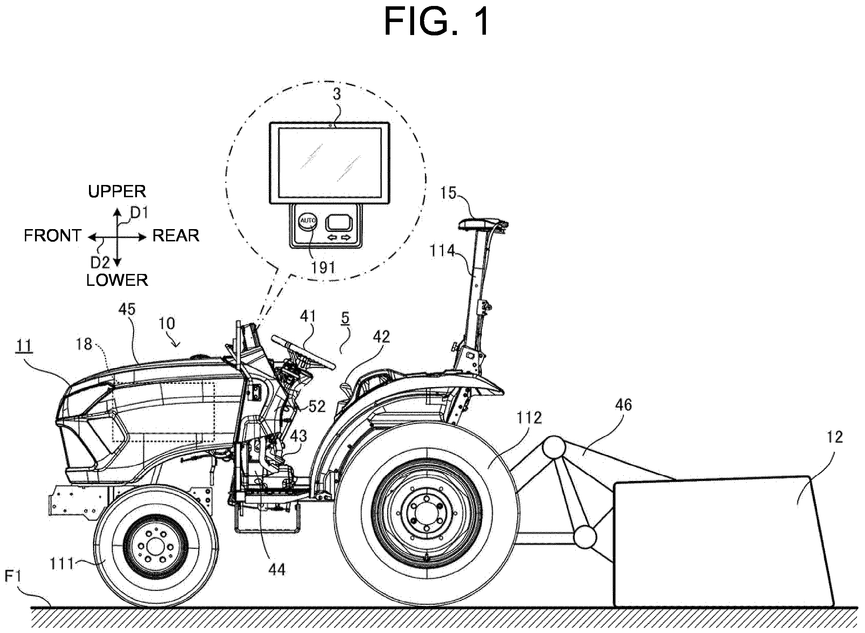

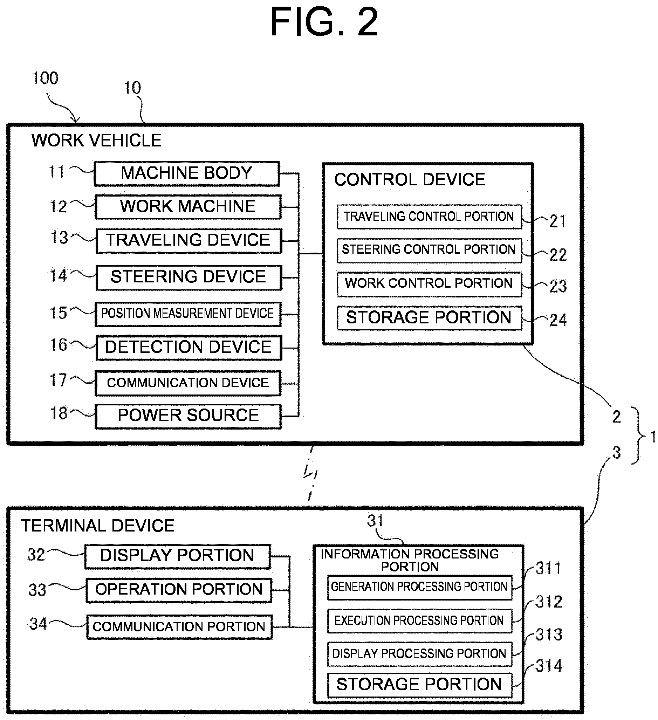

First, an overall configuration of a work system 100 according to the present embodiment will be described with reference to FIG. 1 and FIG. 2. A work vehicle control system 1 (hereinafter, also simply referred to as "control system 1") according to the present embodiment configures the work system 100 together with a machine body 11 of a work vehicle 10. The machine body 11 is mounted with a work machine 12. That is, the work system 100 includes the work vehicle control system 1, and the machine body 11 of the work vehicle 10.

In the present embodiment, the control system 1 includes a control device 2 (see FIG. 2) mounted on the machine body 11 of the work vehicle 10, and a terminal device 3. The work vehicle 10 and the terminal device 3 can communicate with each other. The term "can communicate" in the present disclosure means that information can be transmitted and received directly or indirectly through a communication network (network), a relay, or the like by an appropriate communication method such as wired communication or wireless communication (communication using a radio wave or light as a medium). The communication network includes, for example, the Internet, a local area network (LAN), a wide area network (WAN), a public telephone line, a mobile phone line network, a packet line network, or a wireless LAN. A configuration in which the work vehicle 10 and the terminal device 3 can communicate with each other is not essential in the control system 1.

The work vehicle 10 includes the machine body 11. The machine body 11 is configured to allow a work machine 12 attached thereto. The machine body 11 has an automatic traveling function.

The work vehicle 10 performs some work in a target region F1 (see FIG. 1) by the work machine 12 while moving in the target region F1. The term "work" in the present disclosure is work performed for the target region F1 by the work machine 12, and includes, for example, various types of agricultural work such as tilling, leveling, seeding, fertilizing, spraying of agrochemicals, planting (rice planting), or harvesting, and various types of work such as construction work. In the present embodiment, as an example, the work performed by the work vehicle 10 is tilling work.

The work machine 12 performs work in the target region F1 when the machine body 11 of the work vehicle 10 moves in the target region F1. In the present embodiment, as an example, the work machine 12 is a tiller such as a rotary tiller or a plow that performs tilling work.

The work machine 12 of this type includes a direct-mounted work machine directly attached to a three point link and a towing work machine towed by the machine body 11. In the present embodiment, as an example, the work machine 12 is a direct-mounted rotary tiller detachably attached to the machine body 11 of the work vehicle 10. The work machine 12 is attached to the rear side of the machine body 11 (the opposite side of a direction of forward movement of the machine body 11). That is, the (direct-mounted) work machine 12 is connected to the rear side of the machine body 11, and performs work while moving forward together with the machine body 11 when the machine body 11 moves forward. In the present embodiment, the work machine 12 is included in components of the work vehicle 10, but the work machine 12 may not be included in the components of the work vehicle 10 because the work machine 12 is detachable from the machine body 11.

The term "work machine" in the present disclosure means, for example, a vehicle that performs various types of work in the target region F1 such as a field, and examples thereof include agricultural machines such as a tractor, a seeder, a rice planter, a spreader, a sprayer, a transplanter, and a harvester. The work vehicle 10 may be, for example, a construction machine or the like. In the present embodiment, unless otherwise specified, a case where the work vehicle 10 is a tractor equipped with a rotary tiller as the work machine 12 will be described as an example. That is, the work vehicle 10 is configured by connecting a (direct-mounted) rotary tiller as the work machine 12 to a tractor as the machine body 11. In the work vehicle 10, the machine body 11 travels in the target region F1 such as a field, so that tilling work in the target region F1 can be performed.

As described above, in the present embodiment, the machine body 11 is a type of vehicle that moves by traveling in the target region F1. As illustrated in FIG. 1, the machine body 11 includes steered wheels 111 composed of a pair of right and left front wheels and drive wheels 112 composed of a pair of right and left rear wheels, and travels in the target region F1 by these four wheels (the pair of steered wheels 111 and the pair of drive wheels 112).

Moreover, in the present embodiment, as an example, it is assumed that the work vehicle 10 is an automatic machine that can act by automatic traveling (autonomous traveling or the like) while a driver (operator) can board the work vehicle 10. However, the present embodiment is not limited thereto, and the work vehicle 10 may be an unmanned machine that automatically travels, or may act by an operation (including a remote operation) by a driver (operator).

The term "target region" in the present disclosure is a region in which the work vehicle 10 performs, for example, various types of work such as tilling, leveling, seeding, fertilizing, spraying of agrochemicals, planting (rice planting), or harvesting while moving, and includes a paddy field, a farm, an orchard, a pasture, and the like. For example, when a paddy field or a farm in which crops (agricultural products) such as rice, wheat, soybeans, buckwheat, or the like are grown is the target region F1, the crops grown in the target region F1 are agricultural products. Furthermore, when garden plants are grown in a garden plant farm, the garden plant farm is the target region F1, and when trees to be used as wood are grown in a forest, as in forestry, the forest is the target region F1. In this case, the crops grown in the target region F1 are garden plants, trees, or the like. In the present embodiment, unless otherwise specified, a case where the work vehicle 10 is used for tilling work of a field (target region F1) and the target region F1 is a paddy field for growing rice will be described as an example. Moreover, the target region F1 is not limited to a field. For example, when the work vehicle 10 is a construction machine, a site where the construction machine performs work is the target region F1.

Moreover, the work vehicle 10 can move by automatic traveling not only in the target region F1 (here, the field), but also on a road such as an out-of-field route outside the target region F1, for example. The work vehicle 10 is configured to be able to automatically travel (move) along a target route (including the out-of-field route) set in advance inside the target region F1 and outside the target region F1 on the basis of position information of the current position of the work vehicle 10 measured by a positioning device 15. The out-of-field route is, for example, an inter-field connection route that connects a plurality of target regions F1 (fields). The inter-field connection route is a farm road, a forest road, a public road, a private road, a motorway, or the like, and may be a road dedicated to the work vehicle 10 or a road through which a general vehicle (a passenger vehicle or the like) can pass.

Moreover, the term "automatic travel" in the present disclosure includes "autonomous travel" in which the work vehicle 10 autonomously travels without depending on an operation of an operator, and "semi-automatic traveling" in which only steering is automated, such as straight-travel assist.

The "autonomous travel" is, for example, a traveling mode in which the vehicle speed and the like are automatically controlled in addition to the automatic steering of the steered wheels 111 such that the work vehicle 10 travels along the target route. The "straight-travel assist" is, for example, a traveling mode in which only the automatic steering of the steered wheels 111 is performed and the vehicle speed and the like are controlled by the operation of the operator such that the work vehicle 10 travels along a straight route parallel to a straight line (reference line) serving as a reference. That is, in the "semi-automatic traveling", although the work vehicle 10 cannot travel without the operation of the operator, the burden on the operator for steering is reduced, and the work vehicle 10 can travel along the target route such as a straight route, which leads to an improvement in work efficiency. Since the steered wheels 111 are automatically steered in both the autonomous travel and the semi-automatic travel, the autonomous travel or the semi-automatic travel can be said to be one mode of an "automatic steering mode".

In the automatic steering mode, the steered wheels 111 are automatically steered by an automatic steering mechanism including a steering motor. That is, the automatic steering is realized by changing the direction of the steered wheels 111 by the output of the steering motor instead of operating a steering operation portion 41 (see FIG. 1) by the operator. In short, the machine body 11 of the work vehicle 10 according to the present embodiment has the automatic steering function for automatically steering the steered wheels 111.

In the present embodiment, as an example, the terminal device 3 is configured by a general-purpose terminal such as a tablet terminal, a smartphone, or a laptop computer. Dedicated application software (program) is installed in the terminal device 3 configured by a general-purpose terminal, and the terminal device 3 functions as the terminal device 3 of the control system 1 by activating the application software.

### [2] Schematic Configuration of Work Machine

Next, a configuration of the work vehicle 10 according to the present embodiment will be described in detail with reference to FIG. 1 to FIG. 3.

In the present embodiment, for convenience of explanation, a vertical direction in a state where the work vehicle 10 is usable is defined as an up-down direction D1 (see FIG. 1). A front-rear direction D2 and a left-right direction are defined on the basis of a direction viewed from a driver (operator) riding on (a driving portion 5 of) the machine body 11 of the work vehicle 10. The left side of the left-right direction refers to the left side when the machine body 11 is caused to travel forward (move forward), and the right side of the left-right direction refers to the right side when the machine body 11 is caused to travel forward (move forward). However, these directions are not intended to limit a direction in which the work vehicle 10 is used (direction in use).

As illustrated in FIG. 2, the work vehicle 10 includes, in addition to the machine body 11 and the work machine 12, the control device 2, a traveling device 13, a steering device 14, the positioning device 15, a detection device 16, a communication device 17, and a power source 18. The control device 2, the traveling device 13, the steering device 14, the positioning device 15, the detection device 16, the communication device 17, and the power source 18 are all mounted on the machine body 11.

The machine body 11 has the driving portion 5 (see FIG. 1) which a driver (operator) can board. The steering operation portion 41, an operation lever 42, a pedal 43, and the like included in the steering device 14 are provided in the driving portion 5. The steering operation portion 41, the operation lever 42, the pedal 43, and the like are an operation portion that is operated by the operator. Therefore, the work vehicle 10 is configured to be capable of not only automatic travel but also manual travel by a manual operation of the operator.

A work machine coupling portion 46 configured by a three-point link mechanism, etc. is provided at the rear portion of the machine body 11. A work machine 12 can be attached to the work machine coupling portion 46. The power generated by the power source 18 can be transmitted to the work machine 12 to be towed via the transmission 44 and a power takeoff shaft (PTO shaft) placed in a rear portion of the machine body 11. Since the work machine 12 is detachably coupled to the work machine coupling portion 46, a device different from the work machine 12 can also be coupled to the machine body 11.

In the present embodiment, since the work machine 12 is a direct-mounted rotary tiller, tilling work can be performed on a field as the target region F1 when the machine body 11 moves forward. A relative position in the up-down direction D1 (relative height) of the work machine 12 with respect to the machine body 11 is variable. Thus, the height of the work machine 12 with reference to a field plane, which is a ground level of the target region F1, is variable. For example, by raising the work machine 12 to a height away from the ground level of the target region F1, the work vehicle 10 can travel even in a non-work state in which work by the work machine 12 is not performed.

The traveling device 13 is a device that causes the work vehicle 10 to travel by driving the drive wheels 112 composed of (a pair of right and left) rear wheels, as illustrated in FIG. 1. The traveling device 13 includes the transmission 44, and transmits power generated by the power source 18 to the drive wheels 112 via the transmission 44 to move the machine body 11 forward or backward. Furthermore, the traveling device 13 includes a brake device, and can also decelerate or stop the machine body 11. In the present embodiment, the drive wheels 112 are normal wheels, but are not limited thereto. For example, the machine body 11 may be a half crawler type machine body in which crawlers (crawler belts) are adopted for the drive wheels 112.

The steering device 14 is a device that steers the steered wheels 111 composed of (a pair of right and left) front wheels, as illustrated in FIG. 1. The steering device 14 includes the steering operation portion 41, and steers the steered wheels 111 in response to an operation of the steering operation portion 41 by the operator. The pair of steered wheels 111 is steered by the steering device 14 so as to be inclined leftward or rightward from a reference posture which is a posture facing the front-rear direction D2, that is, a posture in which the rotation axis is along the left-right direction in a plan view. That is, the steering device 14 changes the direction of the pair of steered wheels 111 to steer the steered wheels 111.

When the steering operation portion 41 is operated to rotate clockwise from a state in which the pair of steered wheels 111 is in the reference posture, the steering device 14 performs steering such that (the front ends of) the pair of steered wheels 111 is inclined to the right, and turns the machine body 11 to the right when the machine body 11 moves forward. In contrast, when the steering operation portion 41 is operated to rotate counterclockwise from the state in which the pair of steered wheels 111 is in the reference posture, the steering device 14 performs steering such that (the front ends of) the pair of steered wheels 111 is inclined to the left, and turns the machine body 11 to the left when the machine body 11 moves forward. In the present embodiment, the operator operates the steering operation portion 41 at the time of manual steering, but the present embodiment is not limited thereto. For example, the operator may operate an operation lever or the like to perform the manual steering.

The traveling device 13 and the steering device 14 enable the machine body 11 to travel in the target region F1 so as to move in the front-rear direction D2 and the left-right direction. For example, when the angle of the steered wheels 111 is changed by the steering device 14 in a state where the drive wheels 112 are driven by the traveling device 13 and the machine body 11 travels forward, the machine body 11 turns in the left-right direction to change the traveling direction of the machine body 11.

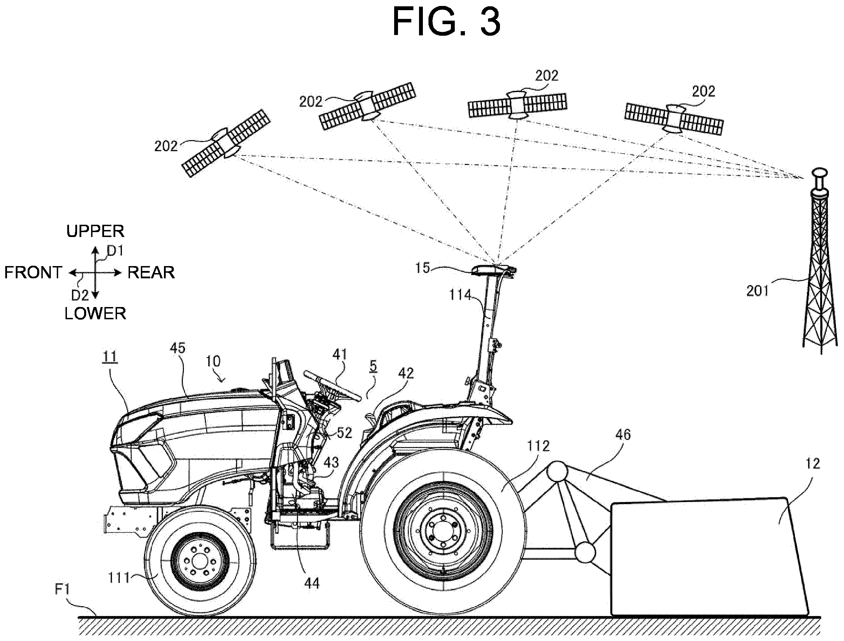

The positioning device 15 obtains the current position (latitude, longitude, altitude, and the like) of the machine body 11. Specifically, the positioning device 15 is provided, for example, on a ROPS frame 114, and calculates the current position (latitude and longitude) of the machine body 11 using a satellite positioning system such as a global navigation satellite system (GNSS). That is, the positioning device 15 has a positioning antenna for receiving positioning signals from a plurality of satellites 202 (see FIG. 3), and calculates the current position on the basis of the positioning signals.

Furthermore, the positioning device 15 includes an inertial sensor, and can also detect a posture such as the current orientation of the machine body 11.

Moreover, as shown in FIG. 3, the positioning device 15 adopts a relatively high-precision positioning method such as real time kinematic (RTK) positioning that calculates the current position of the work vehicle 10 using correction information corresponding to a base station 201 (reference station) close to the work vehicle 10. The current position of the machine body 11 may be the same position as the positioning position (the position of the positioning antenna) or may be a position deviated from the positioning position, such as the center position of the machine body 11 in a plan view. As the positioning device 15, for example, a mobile phone terminal, a smartphone, a tablet terminal, a quantum compass, or the like may be substituted.

The detection device 16 detects an obstacle in a detection area. The detection device 16 includes an obstacle sensor and a detection processing portion. The obstacle sensor may include various sensors such as a camera (image sensor), a sonar sensor, a human detecting sensor, a radar, or a light detection and ranging (LiDAR). The obstacle sensor may be a 3D sensor that measures a distance to an object (obstacle) by a time of flight (TOF) method in which a distance to a distance measurement point is measured on the basis of round-trip time for light or sound to reach the distance measurement point and return from the distance measurement point. The detection processing portion detects an obstacle on the basis of measurement information acquired from the obstacle sensor. The detection processing portion may detect only the presence or absence of an obstacle, or may detect the position, shape, number, attribute (including type), or the like of an obstacle.

A detection result of the detection device 16 is output to the control device 2. When the detection device 16 detects an obstacle at least while the work vehicle 10 automatically travels, the control device 2 outputs a warning (including notification by sound and/or light), and executes obstacle avoidance processing (including detouring, decelerating, stopping, or the like) by controlling the traveling device 13 and the steering device 14. Furthermore, the control device 2 may output to and display on the terminal device 3 position information of the obstacle, an execution history of the avoidance processing, and the like.

The communication device 17 is a communication interface that connects the work vehicle 10 (the control device 2, the positioning device 15, and the like) to an external device by wire or wirelessly so as to execute data communication in accordance with a predetermined communication protocol with the external device. In the present embodiment, the communication device 17 can communicate with at least the terminal device 3 which is an external device. As the communication device 17, for example, a mobile phone terminal, a smartphone, a tablet terminal, or the like may be substituted.

The power source 18 is a drive source that supplies power at least to the traveling device 13. The power source 18 is provided in a front portion of the machine body 11 so as to be covered with a hood 45. The power source 18 is a drive source of the work vehicle 10 and is, for example, a diesel engine. However, the power source 18 of the work vehicle 10 is not limited to the diesel engine, and may be an engine such as a gasoline engine, an electric motor, a hybrid system of an engine and an electric motor, or the like.

Furthermore, the power source 18 drives a hydraulic pump to supply hydraulic oil from the hydraulic pump to a hydraulic cylinder or the like of a power steering mechanism of the steering device 14. That is, the power source 18 is configured to be able to supply power to the power steering mechanism as well.

The transmission 44 is provided behind the power source 18 and below the driving portion 5. The transmission 44 includes a power transmission device. The rotational power of the power source 18 is transmitted to at least one of the steered wheels 111 and the drive wheels 112 (the drive wheels 112 in the present embodiment) via the power transmission device in the transmission 44.

The driving portion 5 is provided behind the power source 18 in the machine body 11. The driving portion 5 includes a driver's seat, a dashboard 52, and the like. The driver's seat is a part where a driver boards. The dashboard 52 also serves as a steering column and is provided in front of the driver's seat.

The steering operation portion 41 is, as one example, a steering wheel that is manipulated by the driver sitting on the driver's seat. The steering operation portion 41 is turnably supported by a steering shaft provided in the dashboard 52. The steering operation portion 41 is provided in front of the driver's seat and above the dashboard 52. The machine body 11 can change the direction (steering angle) of the steered wheels 111 by a rotation operation of the steering operation portion 41.

In addition, for example, the operation lever 42 and the pedal 43 that are operated by the driver, and a meter indicating a speed of the work vehicle 10 and the like are provided in the driving portion 5. The operation lever 42 may include a plurality of levers such as, for example, a main shift lever, a sub shift lever, a work lever, or the like. The pedal 43 may include various types of pedals such as, for example, an accelerator pedal, a brake pedal, and the like.

In the present embodiment, the work vehicle 10 includes a ROPS frame 114 at a rear portion of the driver's seat. The ROPS frame 114 protects the driver when the work vehicle 10 falls over. The work vehicle 10 is not limited to the ROPS specification including the ROPS frame 114, and may be of a cabin use in which a driver's seat is covered with a cabin.

The control device 2 is mainly configured by a computer system having one or more processors, such as a central processing unit (CPU), and one or more memories, such as a read only memory (ROM) and a random access memory (RAM), and executes various types of processing (information processing). In the present embodiment, since the control device 2 is mainly configured by the computer system having one or more processors, the control device 2 is realized when the one or more processors execute a work machine control program. In the present embodiment, the control device 2 is an integrated controller that controls the entire work vehicle 10, and includes, for example, an electronic control unit (ECU). However, the control device 2 may be provided separately from the integrated controller.

The control device 2 is configured to be able to communicate with devices provided in respective parts of the machine body 11. That is, the work machine 12, the traveling device 13, the steering device 14, the positioning device 15, the detection device 16, the communication device 17, the power source 18, and the like are electrically connected to the control device 2. Thus, the control device 2 can control the work machine 12, the traveling device 13, the steering device 14, and the like, and can acquire the output of the positioning device 15, the detection device 16, and the like. The control device 2 may transmit and receive various types of information (data) directly to and from the respective devices or indirectly through a relay or the like.

In the present embodiment, as illustrated in FIG. 2, the control device 2 includes a traveling control portion 21, a steering control portion 22, a work control portion 23, and a storage portion 24.

The traveling control portion 21 controls the traveling device 13 and the power source 18. At least during the autonomous travel, the traveling control portion 21 controls the traveling device 13 and the power source 18 instead of the operator such that the vehicle speed, the engine rotation number, and the like approach target values. Moreover, the traveling control portion 21 can also decelerate or stop the machine body 11 by controlling the brake device of the traveling device 13.

The steering control portion 22 controls the steering device 14. The steering control portion 22 has an automatic steering mode and a manual steering mode as action modes, and is configured to be able to switch between the automatic steering mode and the manual steering mode. The manual steering mode is a mode in which the operator operates the steering operation portion 41 to perform steering. At least during the autonomous travel or the semi-automatic travel, the steering control portion 22 acts in the automatic steering mode and controls the steering device 14 instead of the operator such that the steering angle of the steered wheels 111 approaches a target steering angle.

In particular, during the autonomous travel, the steering control portion 22, together with the traveling control portion 21, executes control of the work vehicle 10 on the basis of the current position of the machine body 11 such that the machine body 11 travels along the target route. The target route for causing the work vehicle 10 to autonomously travel is generated in the terminal device 3, for example. In other words, the work vehicle 10 acquires route data corresponding to the target route from the terminal device 3, and autonomously travels in accordance with the target route.

The work control portion 23 controls the work machine 12. At least during the autonomous travel, the traveling control portion 21 executes control of the work machine 12 on the basis of the current position of the machine body 11 on the target route. Specifically, when the work vehicle 10 travels on a work route, for which work by the work machine 12 is performed, in the target route, the work control portion 23 sets the work machine 12 at a work position and performs the work by the work machine 12. In contrast, when the work vehicle 10 travels on a non-work route, for which the work by the work machine 12 is not performed, in the target route, the work control portion 23 lifts the work machine 12 to a non-work position and stops the work by the work machine 12.

The storage portion 24 is a non-volatile memory or the like that stores the work machine control program and various types of data such as target route information related to the target route. That is, for example, the traveling control portion 21 and the steering control portion 22 can cause the work vehicle 10 to execute the autonomous travel along the target route on the basis of the target route information stored in the storage portion 24.

In addition to the above configuration, the work vehicle 10 further includes a battery, a fuel tank, various sensors, and the like. For example, the battery supplies electric power for action to respective parts of the work vehicle 10 such as the control device 2. In particular, electronic devices such as the control device 2, the steering device 14, the positioning device 15, the detection device 16, and the communication device 17 act by the power supply from the battery, and thus can act even when the power source 18 is stopped.

### [3] Configuration of Terminal Device

Next, a configuration of the terminal device 3 according to the present embodiment will be described in detail with reference to FIG. 1 and FIG. 2.

In the present embodiment, the terminal device 3 can communicate with the work vehicle 10 as described above, and configures the control system 1 together with the control device 2 of the work vehicle 10. That is, components of the control system 1 are dispersedly provided in at least the work vehicle 10 and the terminal device 3. However, the present invention is not limited to this configuration. For example, a function of the control device 2 may be provided in the terminal device 3. In this case, the components of the control system 1 are realized only by the terminal device 3.

In the present embodiment, as an example, the terminal device 3 is configured by a general-purpose terminal such as a tablet terminal, a smartphone, or a laptop computer. The terminal device 3 is provided at a position that is easily visually recognized by the operator, such as the driving portion 5 of the work vehicle 10. The terminal device 3 includes an information processing portion 31, a display portion 32, an operation portion 33, and a communication portion 34, as illustrated in FIG. 2. Furthermore, the terminal device 3 further includes a sound output portion that outputs sound (including voice) to the user (operator), a battery, and the like.

The information processing portion 31 is mainly configured by a computer system having one or more processors such as a CPU and one or more memories such as a ROM and a RAM, and performs various processes (information process). In this embodiment, the information processing portion 31 is mainly configured by a computer system having one or more processors, and therefore the information processing portion 31 is realized by one or more processors that execute a work vehicle control program. In other words, one or more processors of the control device 2 included in the control system 1 and one or more processors of the information processing portion 31 each execute a work vehicle control program, so that the control device 2 and the terminal device 3 cooperate to realize the control system 1.

The information processing portion 31 is configured to be communicable with each portion of the terminal device 3 (the display portion 32, the operation portion 33, and the communication portion 34). That is, the information processing portion 31 is electrically connected to the display portion 32, the operation portion 33, the communication portion 34, and the like. Consequently, the information processing portion 31 can control display of the display portion 32, and acquire operation input to the operation portion 33. Herein, the information processing portion 31 may transmit and receive various information (data) to and from each portion directly or indirectly via a relay or the like.

Such a terminal device 3 is a user interface for accepting operation input from a user (operator) and outputting various information to the user. For example, the terminal device 3 outputs various information to the user by displaying various screens on the display portion 32. Further, the terminal device 3 accepts various operation by the user by outputting an electrical signal corresponding to operation by the user to the operation portion 33. In this disclosure, the "screen" means a picture (image) displayed on the display portion 32 of the terminal device 3 or the like, and includes an image, a figure, a photograph, a text, video, and the like. The screen displayed on the terminal device 3 includes not only an image but also a picture (video) that changes from moment to moment.

The display portion 32 is a user interface that includes a display such as a liquid crystal display or an organic EL display for displaying various types of information. The display portion 32 displays a progress state of the work in the target region F1, the target route of the work vehicle 10, and the operating state of the work vehicle 10 including an (actual) movement trajectory, a current position, a moving speed and the like, thereby enabling remote monitoring by the operator of the work vehicle 10 during automatic driving.

The operation portion 33 is a user interface that includes an input portion such as a touch panel, a mouse, a keyboard, a mechanical switch, and an encoder that accepts operation. The operation portion 33 can accept the start instruction of the automatic travel, the stop instruction of the automatic travel, or the like for the work vehicle 10 from the operator. The terminal device 3 can remotely control the work vehicle 10 by transmitting the start instruction, the travel stop instruction, or the like (of the automatic travel) to the work vehicle 10. Therefore, the operator can remotely control the work vehicle 10.

In the present embodiment, as an example, the display portion 32 and the operation portion 33 are integrated with each other and constitute a touch panel display. The operator, on the operation screen displayed on the display portion 32, operates the operation portion 33, making it possible to execute an operation to set (register) the various types of information. Thus, for example, the operator can use the terminal device 3 to set automatic traveling information (including target route information) related to the automatic traveling of the work vehicle 10.

The communication portion 34 is a communication interface for connecting the terminal device 3 to the work vehicle 10 by wire or wirelessly and performing data communication with the work vehicle 10 according to a predetermined communication protocol. In this embodiment, the communication portion 34 is communicable with at least (the communication device 17 of) the work vehicle 10 via the communication network. Furthermore, the communication portion 34 can be connected to the communication network at least wirelessly, and therefore it is possible to communicate with the work vehicle 10 at any time even when the communication portion 34 is located sufficiently far away from the work vehicle 10.

In this embodiment, the information processing portion 31 includes a generation processing portion 311, an execution processing portion 312, a display processing portion 313, and a storage portion 314, as illustrated in FIG. 2. As an example in this embodiment, the information processing portion 31 is mainly composed of a computer system having one or more processors, and therefore a plurality of these functional portions (such as the generation processing portion 311) are realized by execution of the work vehicle control program by the one or more processors. The plurality of these functional portions included in the information processing portion 31 may be provided in plural housings in a distributed manner, or may be provided in a single housing.

The storage portion 314 is a non-volatile memory or the like that stores the work vehicle control program and various types of data such as target route information related to the target route. Furthermore, the storage portion 314 can store various data such as work machine information, work vehicle information, field information, and work information. The work machine information is information related to the work machine 12 mounted on the machine body 11, and includes, for example, a type, identification information, a model name, a model number, and size (dimensions) of the work machine 12. The work vehicle information is information related to the machine body 11 (vehicle main body) of the work vehicle 10, and includes, for example, the type (e.g., a half crawler type/wheel type, or the like), the identification information, the model name, the model number, the size (dimensions), and the like of the machine body 11. The field information is information related to the field which is the target region F1, and includes information such as field identification information, a field name, a position, a shape, size, a work start position (traveling start position) where the work starts, a work end position (traveling end position) where the work ends, and the working direction. The work information is information related to work performed by the work vehicle 10, including, for example, a type of work and how the work is to be performed specifically. Furthermore, the work information may also include information related to the presence or absence of coordinated work by the work vehicles 10, the width of headland, and the width of non-cultivated land.

The information stored in the storage portion 314 (such as the target route information, the work machine information, the work vehicle information, the field information, and the work information) is set (registered) by inputting operation to the operation portion 33 by the user (operator) or by acquiring the information from the work vehicle 10. For example, the type of the work machine 12 in the work machine information may be specified by operation to the operation portion 33 by the user, or the work vehicle 10 may automatically determine the work machine 12 mounted on the machine body 11 and transmit the work machine information to the terminal device 3. The terminal device 3 may acquire this information from an external device (such as a server, an external storage medium, and another terminal device) other than the work vehicle 10.

The generation processing portion 311 has a function of generating a target route for causing the work vehicle 10 to automatically travel in the target region F1. The generation processing portion 311 generates the target route on the basis of the work machine information, the work vehicle information, the field information, the work information, and the like that are set (registered) by operation input to the operation portion 33 by the user (operator), for example.

Specifically, the generation processing portion 311 generates the target route in the target region F1 on the basis of the traveling start position and the traveling end position that are included in the field information. For example, the generation processing portion 311 generates the target route for moving the machine body 11 of the work vehicle 10 from the traveling start position to the traveling end position within the target region F1.

The execution processing portion 312 performs execution processing of causing the work vehicle 10 to perform a specific action. The term "specific action" in the present disclosure is a specific action executed in the work vehicle 10, and includes, for example, an action automatically performed by the work vehicle 10 by controlling at least one of the work machine 12, the traveling device 13, and the steering device 14 in the work vehicle 10.

In the present embodiment, as an example, the "specific action" includes an action related to automatic travel of the work vehicle 10, specifically, "autonomous travel" in which the work vehicle 10 autonomously travels without depending on an operation of the operator and "semi-automatic travel" (automatic steering travel) in which only steering is automated like straight-traveling assist.

Therefore, when the operator provides a start instruction of the automatic travel, the execution processing portion 312 sends (outputs) the route data of the target route to the work vehicle 10. When the work vehicle 10 receives the route data, the work vehicle 10 performs autonomous travel on the basis of the current position of the work vehicle 10 calculated by the positioning device 15 and the target route specified in the route data.

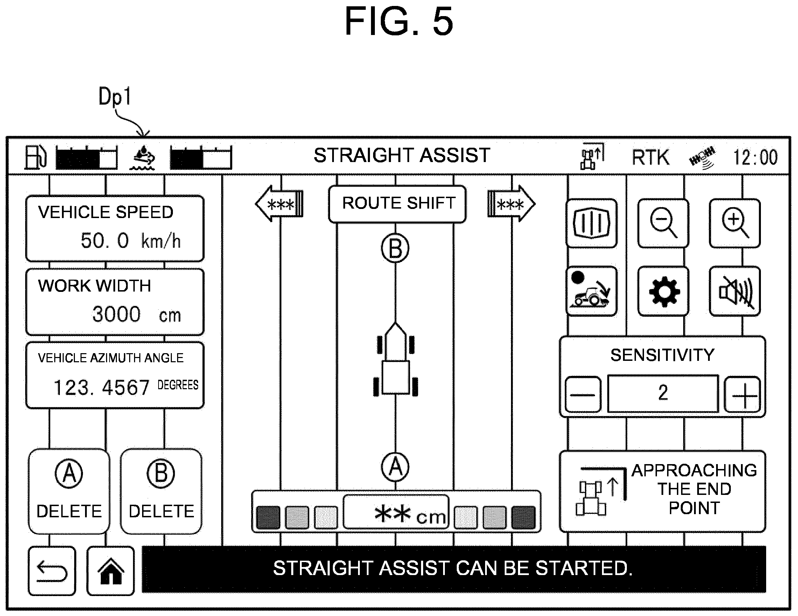

The display processing portion 313 displays various information on the operation display portion 32. For example, the display processing portion 313 displays, on the display portion 32, various display screens such as a display screen for generating a target route and a display screen (a guidance screen Dp1 illustrated in FIG. 5, or the like) for displaying information related to automatic travel (a travel status, a work status, and the like of the work vehicles 10).

The terminal device 3 may be able to access a website (agricultural support site) of an agricultural support service provided by the server via the communication network. In this case, the terminal device 3 can function as a terminal for operating the server by execution of a browser program by the information processing portion 31. The server includes each of the above processing portions and executes each process.

### [4] Work vehicle control method

Hereinafter, with reference to FIG. 3 to FIG. 9, an example of a control method for the work vehicle 10 (hereinafter, simply referred to as the "control method") that is executed mainly by the control system 1 (the control device 2 and the terminal device 3) will be described.

The control method according to the present embodiment is executed by the control system 1 that is mainly configured by a computer system, and thus, in other words, is embodied by a work vehicle control program (hereinafter, simply referred to as "control program"). That is, the control program according to the present embodiment is a computer program to cause one or more processors to execute each processing related to the control method.

When a specific start operation set in advance for executing the control program is performed, the control system 1 executes the following various types of processing related to the control method. The start operation is, for example, startup operation of an application program (work vehicle control program) on the terminal device 3. In contrast, when a specific end operation set in advance is performed, the control system 1 ends the following various types of processing related to the control method. The end operation is, for example, end operation of an application program (work vehicle control program) on the terminal device 3.

### [4.1] Specific Action

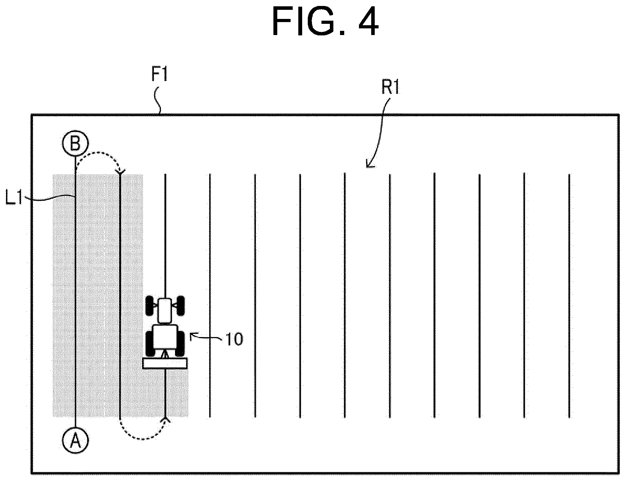

First, the "specific action" that causes the work vehicle 10 to automatically travel in the control system 1 according to the present embodiment will be described with reference to FIG. 4 and FIG. 5. Here, "straight assist travel" in which the work vehicles 10 semi-automatically travel (automatic steering travel) along a target route R1 generated on the basis of a reference line in a target region F1 composed of a certain field will be described as an example of the specific action.

The generation processing portion 311 generates the target route R1 on which the work vehicle 10 automatically travel. For example, as illustrated in FIG. 4, the generation processing portion 311 generates the target route R1 including a plurality of straight routes (work routes) provided at a predetermined interval (equal interval) based on the reference line L1 passing through the point A (first reference point) and the point B (second reference point) in the target region F1.

Hereinafter, an example of a procedure of generating the target route R1 will be described. For example, the display processing portion 313 displays, on the display portion 32, an operation screen for accepting a setting operation to set the reference line L1 from the operator. The operator moves the work vehicle 10 to a desired position in the target region F1 and presses a point A registration button. For example, the operator moves the work vehicle 10 to an outer peripheral end portion of the target region F1 and presses the point A registration button. When the operator presses the point A registration button, the generation processing portion 311 registers the current position of the work vehicle 10 as a first reference point (point A). When the generation processing portion 311 registers the point A, the display processing portion 313 displays, on the display portion 32, the operation screen for accepting a registration operation of a second reference point (point B). The operator causes the work vehicle 10 to manually travel in a direction (target direction) in which the work vehicle 10 is desired to travel and work. Specifically, the operator causes the work vehicle 10 to travel straight ahead in a direction parallel to a work direction (for example, tilling direction) when the work vehicle 10 works. At this time, the work vehicle 10 may perform predetermined work (for example, tilling work) while manually traveling. Then, the operator presses a point B registration button at another desired location (for example, an outer peripheral end portion of the target region F1). When the operator presses the point B registration button, the generation processing portion 311 registers the current position of the work vehicle 10 as a second reference point (point B).

When acquiring position information of the point A and the point B, the generation processing portion 311 sets a straight line passing through the point A and the point B as the reference line L1. The generation processing portion 311 may be capable of adjusting an orientation of the generated reference line L1. For example, the generation processing portion 311 displays the generated reference line L1 on the operation screen and, when accepting the registration operation from the operator, sets (registers) the reference line L1. In contrast, when accepting an operation to change the orientation of the reference line L1 (for example, a screen touch operation) from the operator, the generation processing portion 311 adjusts the orientation of the reference line L1 in response to the operation. When accepting the operation to register the point B, the generation processing portion 311 may display a selection screen for registering or adjusting the reference line L1.

The generation processing portion 311 generates a travel route (the target route R1) that includes the reference line L1 and a plurality of straight lines parallel to the reference line L1. For example, the generation processing portion 311 generates a plurality of parallel straight lines at regular intervals with reference to the reference line L1 on the basis of a work width (a lateral width of the work machine 12) and a lap width (a width that overlaps an adjacent worked area) set in advance. The generation processing portion 311 registers the generated target route R1 in the storage portion 314 and causes the operation display portion 32 to display the generated target route R1.

According to the method described above, as shown in FIG. 4, the target route R1 can be generated by the reference line L1 passing through two points (point A and point B) at both end portions of the target region F1, and thus the accuracy of work by the work vehicle 10 can be improved. The generation processing portion 311 may be capable of registering the point B when the work vehicle 10 has traveled a predetermined distance (for example, 5 m) after registering the point A. Thus, the reference line L1 having higher accuracy can be set.

The method of setting the reference line L1 is not limited to the above-described method. For example, instead of the point B registration, the reference line L1 may be automatically registered based on the direction of the machine body 11 at the time when the point A registration is performed. When the point A registration is performed instead of the point B registration, the reference line L1 may be automatically registered in accordance with an azimuth angle set (for example, by the operator).

After the target route R1 is generated, when the work vehicle 10 satisfies various conditions (preceding conditions) for starting the automatic travel and enters the automatic travel enabled state, the display processing portion 313 displays a guidance screen Dp1 as illustrated in FIG. 5 on the display portion 32. The "preceding condition" is included in the start condition for starting the specific action, and includes, for example, that the work vehicle 10 is located within a predetermined range from the target route R1 and within a predetermined orientation with respect to the target route R1, that the parking brake of the work vehicle 10 is released, that the operator is sitting in the driver's seat, and that the position measurement accuracy (positional accuracy) of the work vehicle 10 is good. That is, for example, when the work vehicles 10 is located within a predetermined range from the target route R1 and within a predetermined orientation with respect to the target route R1, the parking brake of the work vehicle 10 is released, the operator is sitting in the driver's seat, and the position measurement accuracy (positional accuracy) of the work vehicles 10 is good, the preceding condition is satisfied, and the display processing portion 313 displays the guidance screen Dp1. Whether the operator is sitting in the driver's seat can be determined from, for example, the output of a seat sensor provided in the driver's seat.

Thus, when the preceding condition is satisfied and the work vehicle 10 enters the automatic travel enabled state, the display processing portion 313 displays the guidance screen Dp1. In this case, the display processing portion 313 displays, on the guidance screen Dp1, a message indicating that the work vehicle 10 has entered the automatic traveling enabled state (for example, "capable of starting straight assist"). The guidance screen Dp1 illustrated in FIG. 5 is an example of the "first screen" for accepting the start operation (start instruction) of the specific action from the operator.

Then, to start the specific action (automatic travel), the operator performs a start operation of the specific action in a state where the guidance screen Dp1 is displayed on the display portion 32. The start operation of the specific action is, for example, to operate (press) the automatic travel switch 191 (see FIG. 1) provided separately from the terminal device 3. When the automatic travel switch 191 is operated (pressed) in a state where the guidance screen Dp1 is displayed on the display portion 32 of the terminal device 3, the execution processing portion 312 starts automatic travel (straight assist travel) of the work vehicle 10 so that the work vehicle 10 travels along the target route R1. Thus, the work vehicle 10 performs the predetermined work while automatically traveling along the work route included in the target route R1, is switched to the manual travel at the end point of the work route, and turns on the turning route by the manual steering performed by the operator.

When the start operation of the specific action (the operation of the automatic travel switch 191) is performed in a state where the guidance screen Dp1 is displayed on the display portion 32 of the terminal device 3, the display processing portion 313 displays, on the guidance screen Dp1, a message indicating that the work vehicle 10 is conducting automatic travel (for example, "conducting straight assist travel"). The message indicating that the automatic travel is conducted is displayed instead of, for example, the message indicating that the automatic travel can be started ("straight assist can be started") in FIG. 5.

When stopping the specific action (here, automatic travel) of the work vehicle 10, the operator performs a stop operation of the specific action. The stop operation of the specific action is, for example, operating (pressing) the automatic travel switch 191 while the work vehicle 10 automatically travels. When accepting the specific action stop operation, the execution processing portion 312 stops the automatic travel and switches to the manual travel. For example, when the operator presses the automatic travel switch 191 while the work vehicle 10 is automatically traveling in a state where the guidance screen Dp1 is displayed, the vehicle control device 11 stops the automatic travel and the display processing portion 313 displays, on the guidance screen Dp1, a message indicating that the automatic travel has been stopped (for example, "straight assist has been stopped").

The operation of stopping the automatic travel when the work vehicle 10 is automatically traveling is not limited to the stop operation of the specific action described above, and may be, for example, an operation of the steering operation portion 41. Specifically, when the operator riding on the work vehicle 10 rotates (steers) the steering operation portion 41 by a predetermined angle or more during the automatic travel of the work vehicle 10, the vehicle execution processing portion 312 stops the specific action (automatic travel).

When the preceding condition is no longer satisfied during the automatic travel of the work vehicle 10, the work vehicle 10 may stop the automatic travel. Specifically, when the operator riding on the work vehicle 10 stands up from the seat or the position measurement accuracy (positional accuracy) of the work vehicle 10 decreases while the work vehicle 10 is automatically traveling, the execution processing portion 312 stops the specific action (automatic travel) because the preceding condition is not satisfied. The cause for stopping the specific action (automatic travel) is not limited to the above-described causes, and includes, for example, an action abnormality of the work vehicle 10. The message displayed on the guidance screen Dp1 when the specific action (automatic travel) has been stopped may include a message indicating the cause of the stop (for example, "You have left the seat").

### [4.2] Specific Action Start Condition

Next, the "start condition" that is a condition for starting the specific action in the control system 1 according to the present embodiment will be described with reference to FIG. 5 to FIG. 9. The "straight assist travel" will be described as an example of the specific action.

When the operator performs the start operation of the specific action (the operation of the automatic travel switch 191) in a state where the start condition is satisfied, the execution processing portion 312 starts the specific action (automatic travel). In the present embodiment, as described above, the start condition includes, for example, a "preceding condition" such as the work vehicles 10 being located within a predetermined distance from the target route R1 and within a predetermined orientation with respect to the target route R1. The start condition includes a display condition related to the display of the display portion 32 in addition to such a preceding condition.

That is, in the control method according to the present embodiment, the start condition is satisfied only after the display of the display portion 32 satisfies the display condition in addition to satisfying the preceding condition, and the specific action (automatic travel) is started when the operator performs the start operation of the specific action. In other words, even in a case where the preceding condition is satisfied, when the display on the display portion 32 does not satisfy the display condition, the start condition is not satisfied, and when the operator performs the start operation of the specific action, the specific action (automatic travel) cannot be started.

The display condition includes displaying a first screen as a display screen on the display portion 32. In the present embodiment, the guidance screen Dp1 illustrated in FIG. 5 is an example of the first screen. Therefore, as described above, in addition to satisfying the preceding condition, in a state where the guidance screen Dp1 illustrated in FIG. 5 is displayed on the display portion 32, the display of the display portion 32 satisfies the display condition and the start condition is satisfied, and the operator performs the start operation of the specific action to start the specific action (automatic travel).

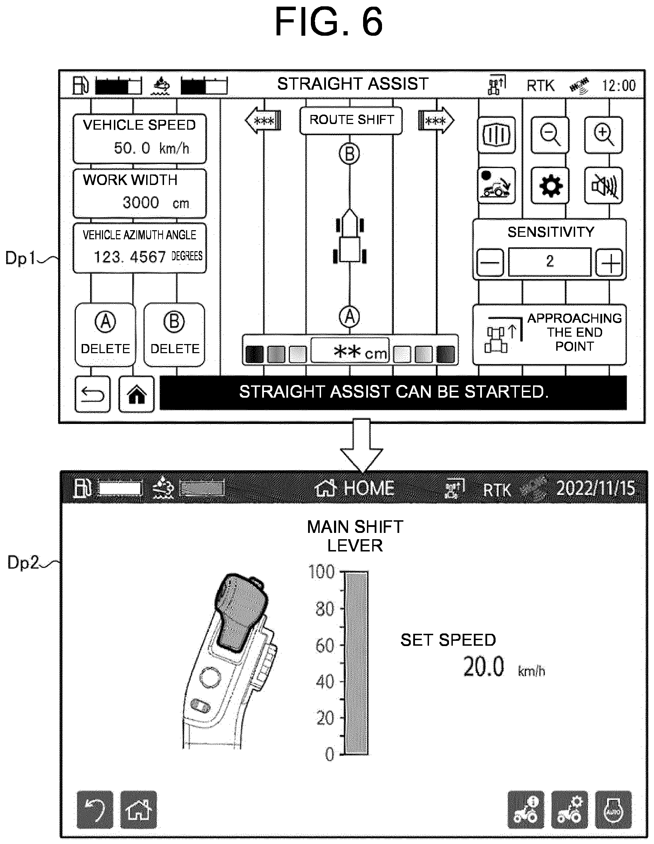

However, if the display condition is only that the first screen (guidance screen Dp1) is being displayed as the display screen, the work vehicles 10 can start the specific action (automatic travel) only in a state where the specific display screen (first screen) is displayed on the display portion 32 of the terminal device 3. Therefore, for example, since the specific action cannot be started in a state where a display screen other than the first screen (guidance screen Dp1) is displayed on the display portion 32 as in an interruption screen Dp2 illustrated in the lower part of FIG. 6, the display of the display portion 32 needs to be switched to the guidance screen Dp1 to start the specific action. Therefore, the specific action may not be started at a timing desired by the user (operator).

Therefore, in the control method according to the present embodiment, the display condition is that, in addition to that the first screen (guidance screen Dp1) is being displayed as the display screen, the second screen different from the first screen is being displayed as the display screen and the mode of screen transition satisfies a specific condition. That is, the display condition is satisfied not only when the first screen is being displayed as the display screen but also when the second screen different from the first screen is being displayed as the display screen and the mode of screen transition satisfies the specific condition.

The second screen is a type of display screen displayed on the display portion 32, and is a screen different from the first screen (the guidance screen Dp1 in the present embodiment). In the present embodiment, the interruption screen Dp2 as illustrated in FIG. 6 is an example of the second screen. The interruption screen Dp2 is a display screen related to the set speed of the main shift lever included in the operation lever 42, and is automatically displayed by the display processing portion 313 when the main shift lever is operated. That is, as illustrated in FIG. 6, when the main shift lever is operated while the guidance screen Dp1 as the first screen is displayed, the display screen displayed on the display portion 32 transitions from the guidance screen Dp1 to the interruption screen Dp2 as the second screen.

Then, in the present embodiment, as illustrated in FIG. 6, when the display screen transitions from the first screen (guidance screen Dp1) to the specific second screen (interruption screen Dp2), the mode of screen transition of the display screen at this time satisfies the specific condition. That is, even in a case where the second screen (interruption screen Dp2) different from the first screen is being displayed as described above, the display condition is exceptionally satisfied when the mode of screen transition satisfies the specific condition. Therefore, as illustrated in the lower part of FIG. 6, even in a case where the interruption screen Dp2 as the second screen is being displayed, when another preceding condition is satisfied and the operator performs the start operation of the specific action (operation of the automatic travel switch 191), the execution processing portion 312 starts the specific action (automatic travel).

As described above, the control method according to the present embodiment includes causing the work vehicle 10 to execute a specific action and causing the display portion 32 to display a display screen. The start condition for starting the specific action includes a display condition related to the display of the display portion 32. In this control method, when the first screen (for example, the guidance screen Dp1) is being displayed as the display screen, or when the second screen (for example, the interruption screen Dp2) different from the first screen is being displayed as the display screen and the mode of screen transition satisfies the specific condition, it is determined that the display condition is satisfied.

Therefore, for example, even in a state where a display screen (second screen) other than the first screen is displayed on the display portion 32, when the mode of screen transition satisfies the specific condition, the specific action can be started without switching the display of the display portion 32 to the first screen. As a result, the degree of freedom of the timing at which the work vehicle 10 starts the specific action can be improved.

However, in the control method according to the present embodiment, even in a case where the second screen is being displayed as the display screen, when the mode of screen transition does not satisfy the specific condition, it is determined that the display condition is not satisfied. For example, when a transition is made from a display screen other than the first screen (guidance screen Dp1), such as the home screen, to the interruption screen Dp2 as the second screen, since the mode of screen transition does not satisfy the specific condition during the display of the second screen, it is determined that the display condition is not satisfied. That is, since the display condition is determined in consideration of the history of screen transition instead of simply depending on the display screen currently being displayed, even when the second screen (interruption screen Dp2) is being displayed, the display condition may not be satisfied and the specific action may not be started.

Thus, by imposing the display condition in consideration of the screen transition, the situation in which the specific action can be started can be limited. Therefore, it is easy to prevent the specific action from being started against the intention of the operator, such as an erroneous operation.

The specific condition includes that the display screen has transitioned from the first screen to the second screen. That is, the display condition is satisfied when the second screen (interruption screen Dp2) is being displayed and the display screen is directly transitioned from the first screen (guidance screen Dp1) to the second screen (interruption screen Dp2). Therefore, the specific action can be started when the second screen that is easily transitioned from the first screen, such as the interruption screen Dp2, is being displayed, and the degree of freedom of the timing of causing the work vehicle 10 to start the specific action can be improved.

The specific action includes an action related to automatic travel of the work vehicle 10. In the present embodiment, in particular, the straight assist travel is an example of the specific action. Thus, the degree of freedom of the timing at which the work vehicle 10 starts the automatic travel can be improved.

The start condition includes a condition other than the display condition. In the present embodiment, the start condition includes, as a condition other than the display condition, for example, a "preceding condition" such as that the work vehicles 10 is located within a predetermined distance from the target route R1 and within a predetermined orientation with respect to the target route R1. Thus, the specific action cannot be started only by satisfying the display condition, and it is easy to prevent the specific action from being started against the intention of the operator, such as an erroneous operation.

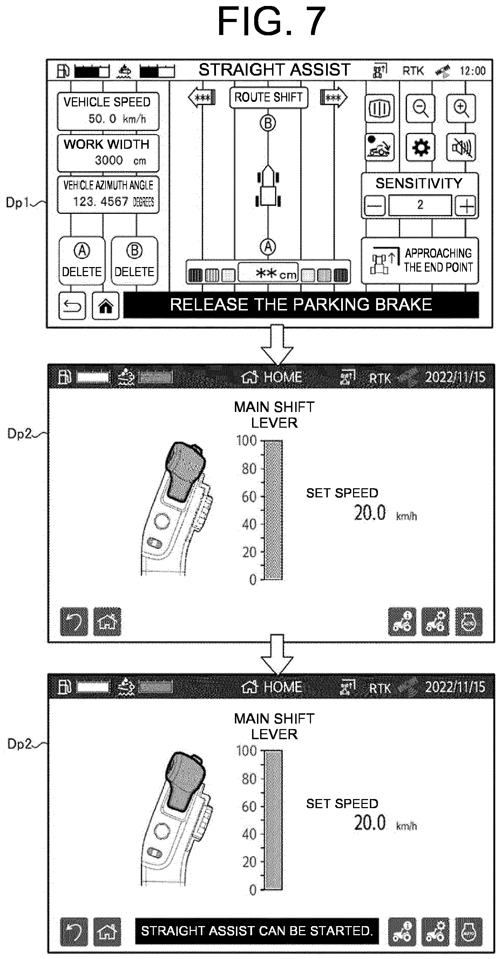

FIG. 7 illustrates the guidance screen Dp1 when the preceding condition (here, "the parking brake is released") is not satisfied. As illustrated in FIG. 7, even in a case where the display screen transitions from the first screen (guidance screen Dp1) to the second screen (interruption screen Dp2) in a state where the preceding condition is not satisfied, when the preceding condition is satisfied while the interruption screen Dp2 is being displayed, it is determined that the start condition is satisfied.

In short, when the preceding condition is satisfied in a state where the interruption screen Dp2 as the second screen is displayed on the display portion 32 as illustrated in the middle part of FIG. 7, a message indicating that the automatic travel has become possible ("Straight assist can be started") is displayed on the interruption screen Dp2 as the second screen as illustrated in the lower part of FIG. 7. Since all the start conditions are satisfied in a state where the second screen (the interruption screen Dp2) in the lower part of FIG. 7 is displayed, when the operator performs the start operation of the specific action (the operation of the automatic travel switch 191), the execution processing portion 312 starts the specific action (automatic travel).

Thus, the control method according to the present embodiment further includes issuing the start possibility notification when the second screen (the interruption screen Dp2) is being displayed as the display screen and the start condition is satisfied. In short, even in a case where the second screen (the interruption screen Dp2) is being displayed, when the mode of screen transition satisfies the specific condition (that is, satisfies the display condition) and all the conditions (the preceding conditions) other than the display condition are satisfied, the notification (the start possibility notification) indicating that the specific action (the automatic travel) can be started is performed. Thus, the operator can know that the specific action (automatic travel) can be started, and the operability is improved.

In particular, in the present embodiment, the start possibility notification is performed by the display on the second screen (the interruption screen Dp2). That is, the message ("Straight assist can be started") included in the second screen (interruption screen Dp2) in the lower part of FIG. 7 is an example of the start possibility notification. Thus, even when the first screen (guidance screen Dp1) is not displayed on the display portion 32, the operator can know that the specific action (automatic travel) can be started by the display of the display portion 32.

The specific action is started when the operation portion provided outside the display screen is operated in a state where the start condition is satisfied. In the present embodiment, as an example, operating (pressing) the automatic travel switch 191 (see FIG. 1) provided separately from the terminal device 3 is the start operation of the specific action for starting the specific action. That is, the automatic travel switch 191 is an example of an operation portion placed outside the display screen.

Thus, since the specific action is started only after the operation portion outside the display screen is operated, it is easy to prevent the specific action from being started against the intention of the operator, such as an erroneous operation, as compared with a case where the processing for starting the specific action is completed only on the display screen. However, the operation portion for the start operation of the specific action may be included in the display screen as, for example, an icon in the display screen.

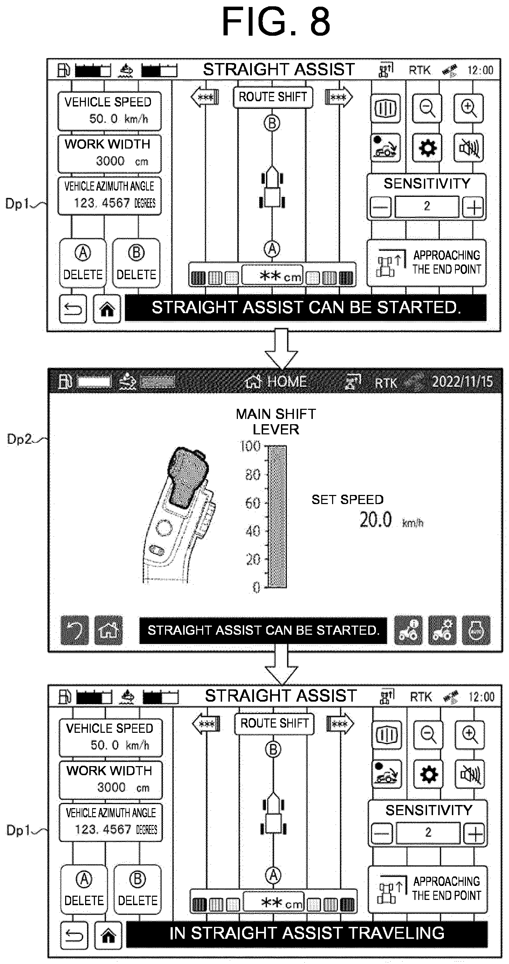

Further, in the present embodiment, when the operation portion (the automatic travel switch 191) is operated while a screen other than the first screen (the guidance screen Dp1) is being displayed as the display screen, the display processing portion 313 transitions the display screen to the first screen (the guidance screen Dp1). That is, as illustrated in FIG. 8, when the start operation of the specific action is performed in a state where the second screen (interruption screen Dp2) is displayed on the display portion 32, the display screen automatically transitions from the second screen to the first screen.

Thus, the specific display screen that is the first screen (guidance screen Dp1) is displayed on the display portion 32 while the specific action (automatic travel) is being executed, and the operator can confirm the information necessary for the specific action on the display screen.

When the specific action is started while a screen other than the first screen (guidance screen Dp1) is displayed as the display screen, the display processing portion 313 may transition the display screen to the first screen (guidance screen Dp1). That is, the actual start of the specific action rather than the start operation of the specific action may trigger an automatic transition of the display screen from the second screen to the first screen.

Thus, the specific display screen that is the first screen (guidance screen Dp1) is displayed on the display portion 32 while the specific action (automatic travel) is being executed, and the operator can confirm the information necessary for the specific action on the display screen.

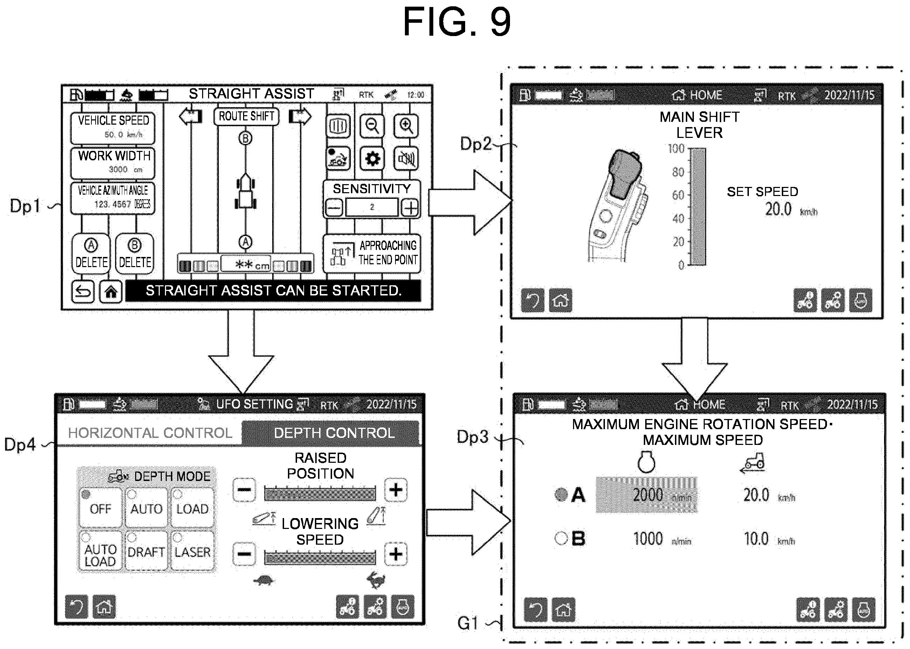

In the present embodiment, the display screens are grouped. The specific condition includes that the mode of screen transition is the transition between the display screens within the same group. As an example, a screen transition as illustrated in FIG. 9 is assumed. In FIG. 9, the interruption screen Dp3 is a display screen related to the maximum engine speed and the maximum vehicle speed, and is classified into the same group G1 as the interruption screen Dp2. On the other hand, the UFO operation screen Dp4 is a display screen for setting related to depth control and is classified into a group different from the group G1. It is assumed that both the interruption screen Dp2 and the interruption screen Dp3 are the "second screen".

In FIG. 9, when the display screen transitions from the guidance screen Dp1 that is the first screen to the interruption screen Dp2 that is the second screen, and then transitions to the interruption screen Dp3 that is the second screen, the mode of screen transition satisfies the specific condition and satisfies the display condition while the interruption screen Dp3 is displayed because the transition from the interruption screen Dp2 to the interruption screen Dp3 is a transition in the same group G1. On the other hand, when the display screen transitions from the guidance screen Dp1 that is the first screen to the UFO operation screen Dp4, and then transitions to the interruption screen Dp3 that is the second screen, the mode of screen transition does not satisfy the specific condition and does not satisfy the display condition while the interruption screen Dp3 is displayed because the transition from the UFO operation screen Dp4 to the interruption screen Dp3 is a transition between different groups.

Thus, by setting more various specific conditions, the degree of freedom of the timing of starting the specific action is improved.

The specific condition includes that the elapsed time from the transition of the display screen to the second screen is within a time limit. That is, in the example of FIG. 9, when the elapsed time from the transition to the interruption screen Dp3 that is the second screen is within a predetermined time limit (for example, several seconds), the mode of screen transition satisfies the specific condition, and when the elapsed time exceeds the time limit, the mode of screen transition does not satisfy the specific condition. The counting of the elapsed time may be started at the time of transition from the guidance screen Dp1 to the interruption screen Dp2, or may be started at the time of transition from the interruption screen Dp2 to the interruption screen Dp3. Thus, by providing the time limit after the screen transition, it is easy to prevent the specific action from being started against the intention of the operator, such as an erroneous operation.

### [5] Modifications

Modifications of the first embodiment will be listed below. The modifications explained below can be applied in combination as appropriate.

The control system 1 in this disclosure includes a computer system. The computer system is mainly configured by one or more processors and one or more memories as hardware. The processors execute a program (the work vehicle control program) recorded in the memories of the computer system, thereby realizing the function as the control system 1 in the present disclosure. The program may be recorded in advance in the memories of the computer system, may be provided through an electric communication line, or may be provided by being recorded in a non-transitory recording medium, such as a memory card, an optical disk, or a hard disk drive, that is readable by the computer system. Moreover, some or all of the functional portions included in the control system 1 may be configured by an electronic circuit.

The configuration that at least some of the functions of the control system 1 are integrated in the single casing is not essential to the control system 1, and the components of the control system 1 may separately be provided in the plural casings. In contrast, in the first embodiment, functions distributed into a plurality of devices (e.g., the control device 2 and the terminal device 3) may be integrated into a single housing. Furthermore, at least a part of the functions of the control system 1 may be realized by a cloud (cloud computing) or the like.

Moreover, the terminal device 3 is not limited to a general-purpose terminal such as a tablet terminal, a smartphone, or a laptop computer, and may be configured by a dedicated terminal. Furthermore, a plurality of terminal devices 3 may be associated with one work vehicle 10. In this case, the one work vehicle 10 can be controlled by the plurality of terminal devices 3. In contrast, one terminal device 3 may be associated with a plurality of work vehicles 10. In this case, the plurality of work vehicles 10 can be controlled by the one terminal device 3.

### [Supplementary Note of Invention]

Hereinafter, an outline of the invention extracted from the above-described embodiment will be described in supplementary notes. Note that components and processing functions described in the following supplementary notes can be arbitrary selected and combined.

### <Supplementary Note 1>

A work vehicle control method comprising:
causing a work vehicle to perform a specific action; and
causing a display portion to display a display screen,
wherein a start condition for starting the specific action includes a display condition related to display of the display portion, and
it is determined that the display condition is satisfied when either a first screen is being displayed as the display screen or a second screen different from the first screen is being displayed as the display screen and a mode of screen transition satisfies a specific condition.

### <Supplementary Note 2>

The work vehicle control method according to Supplementary Note 1, wherein
the specific condition includes that the display screen has transitioned from the first screen to the second screen.

### <Supplementary Note 3>

The work vehicle control method according to Supplementary Note 1 or 2, wherein
the specific action includes an action related to automatic travel of the work vehicle.

### <Supplementary Note 4>

The work vehicle control method according to any one of Supplementary Notes 1 to 3, wherein
the start condition includes a condition other than the display condition.

### <Supplementary Note 5>

The work vehicle control method according to any one of Supplementary Notes 1 to 4, wherein
the specific action is started when an operation portion provided outside the display screen is operated in a state where the start condition is satisfied.

### <Supplementary Note 6>

The work vehicle control method according to Supplementary Note 5, wherein
when the operation portion is operated while a screen other than the first screen is displayed as the display screen, the display screen is transitioned to the first screen.

### <Supplementary Note 7>

The work vehicle control method according to any one of Supplementary Notes 1 to 6, wherein
when the specific action is started while a screen other than the first screen is displayed as the display screen, the display screen is transitioned to the first screen.

### <Supplementary Note 8>

The work vehicle control method according to any one of Supplementary Notes 1 to 7, wherein
the specific condition includes that an elapsed time from when the display screen transitions to the second screen is within a time limit.

### <Supplementary Note 9>

The work vehicle control method according to any one of Supplementary Notes 1 to 8, wherein
when the mode of screen transition does not satisfy the specific condition even while the second screen is being displayed as the display screen, it is determined that the display condition is not satisfied.

### <Supplementary Note 10>

The work vehicle control method according to any one of Supplementary Notes 1 to 9, wherein
the display screens are grouped and
the specific condition includes that the mode of screen transition is a transition within a same group.

### <Supplementary Note 11>

The work vehicle control method according to any one of Supplementary Notes 1 to 10, further comprising:
when the second screen is being displayed as the display screen and the start condition is satisfied, performing a start possibility notification.

### <Supplementary Note 12>

The work vehicle control method according to Supplementary Note 11, wherein:
the start possibility notification is performed by display on the second screen.

### <Supplementary Note 13>

A work vehicle control program for causing one or more processors to execute
the work vehicle control method according to any one of Supplementary Notes 1 to 12.

### REFERENCE SIGNS LIST

1 work vehicle control system
10 work vehicle
11 machine body
32 display portion
100 work system
312 execution processing portion
313 display processing portion
191 automatic travel switch (operation portion)
Dp1 guidance screen (first screen)
Dp2, Dp3 interruption screen (first screen)
G1 group

## Claims

1. A work vehicle control method comprising:
causing a work vehicle to perform a specific action; and
causing a display portion to display a display screen,
wherein a start condition for starting the specific action includes a display condition related to display of the display portion, and
it is determined that the display condition is satisfied when either a first screen is being displayed as the display screen, or a second screen different from the first screen is being displayed as the display screen and a mode of screen transition satisfies a specific condition.

2. The work vehicle control method according to claim 1, wherein
the specific condition includes that the display screen has transitioned from the first screen to the second screen.

3. The work vehicle control method according to claim 1 or 2, wherein
the specific action includes an action related to automatic travel of the work vehicle.

4. The work vehicle control method according to claim 1 or 2, wherein
the start condition includes a condition other than the display condition.

5. The work vehicle control method according to claim 1 or 2, wherein
the specific action is started when an operation portion provided outside the display screen is operated in a state where the start condition is satisfied.

6. The work vehicle control method according to claim 5, wherein
when the operation portion is operated while a screen other than the first screen is displayed as the display screen, the display screen is transitioned to the first screen.

7. The work vehicle control method according to claim 1 or 2, wherein
when the specific action is started while a screen other than the first screen is displayed as the display screen, the display screen is transitioned to the first screen.

8. The work vehicle control method according to claim 1 or 2, wherein
the specific condition includes that an elapsed time from when the display screen transitions to the second screen is within a time limit.

9. The work vehicle control method according to claim 1 or 2, wherein
when the mode of screen transition does not satisfy the specific condition even while the second screen is being displayed as the display screen, it is determined that the display condition is not satisfied.

10. The work vehicle control method according to claim 1 or 2, wherein
the display screens are grouped and
the specific condition includes that the mode of screen transition is a transition within a same group.

11. The work vehicle control method according to claim 1 or 2, further comprising:
when the second screen is being displayed as the display screen and the start condition is satisfied, performing a start possibility notification.

12. The work vehicle control method according to claim 11, wherein:
the start possibility notification is performed by display on the second screen.

13. A work vehicle control program for causing one or more processors to execute
the work vehicle control method according to claim 1 or 2.

14. A work vehicle control system comprising:
an execution processing portion that causes a work vehicle to perform a specific action; and
a display processing portion that causes a display portion to display a display screen,
wherein a start condition for the execution processing portion to start the specific action includes a display condition related to display of the display portion, and
the execution processing portion determines that the display condition is satisfied when either a first screen is being displayed as the display screen, or a second screen different from the first screen is being displayed as the display screen and a mode of screen transition satisfies a specific condition.

15. A work system comprising:
the work vehicle control system according to claim 14; and
a machine body of the work vehicle.
